(19) Europäisches Patentamt
European Patent Office
Office européen des brevets

(11) **EP 3 091 629 B1**

(12) **FASCICULE DE BREVET EUROPEEN**

(45) Date de publication et mention
de la délivrance du brevet:
**06.03.2019   Bulletin 2019/10**

(51) Int Cl.:
*G05B 13/02* (2006.01)          *G06Q 40/04* (2012.01)
*H02J 3/28* (2006.01)          *H02J 3/00* (2006.01)
*G06Q 50/06* (2012.01)

(21) Numéro de dépôt: **16168362.8**

(22) Date de dépôt: **04.05.2016**

(54) **PROCÉDÉ ET DISPOSITIF DE FOURNITURE D'OFFRE AGRÉGÉE D'ÉNERGIE ÉLECTRIQUE**

VERFAHREN UND VORRICHTUNG ZUR LIEFERUNG EINES ANGEBOTS AN ELEKTRISCHER ENERGIE

METHOD AND DEVICE FOR PROVIDING AN AGGREGATED OFFER FOR ELECTRIC POWER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **05.05.2015   FR 1554034**

(43) Date de publication de la demande:
**09.11.2016   Bulletin 2016/45**

(73) Titulaire: **Schneider Electric Industries SAS 92500 Rueil-Malmaison (FR)**

(72) Inventeurs:
• **LEBEAU, Bernard 38050 GRENOBLE CEDEX 09 (FR)**
• **MARCHAND, Jeremie 38050 GRENOBLE CEDEX 09 (FR)**

(74) Mandataire: **Lavoix 62, rue de Bonnel 69448 Lyon Cedex 03 (FR)**

(56) Documents cités:
**US-A1- 2008 281 663**

• **David Pisinger: "Algorithms for Knapsack Problems", , 1 février 1995 (1995-02-01), XP055252333, Extrait de l'Internet: URL:http://www.diku.dk/users/pisinger/95-1 .pdf [extrait le 2016-02-23]**

# Description

La présente invention concerne un procédé de fourniture d'une offre agrégée d'énergie électrique pour un intervalle de temps prédéterminé à partir d'une pluralité de sites clients d'un réseau électrique. Elle concerne également un dispositif associé.

L'invention se situe dans le domaine des réseaux électriques intelligents pour contribuer à l'équilibre production-consommation d'électricité.

De manière connue, dans les réseaux électriques dits intelligents, les sites client, appartenant à des utilisateurs finaux, sont amenés à être contributeurs à l'équilibre du réseau électrique.

L'équilibre du réseau électrique nécessite en permanence de garantir une égalité parfaite entre la production et la consommation pour éviter les black-out quels que soient les événements et les situations comme des conditions météo extrêmes, la perte subite d'une centrale de production, une mauvaise prévision de consommation.

Il existe diverses méthodes connues de régulation du réseau électrique, comme l'ajout ou le retrait de producteur, l'arrêt de consommation de gros consommateurs.

Dernièrement, les sites clients peuvent également comprendre des producteurs ou sources d'énergie électrique, par exemple des panneaux solaires, des éoliennes, et des moyens de stockage d'énergie électrique (par exemple des groupes électrogènes ou des batteries).

Ainsi, les sites clients sont capables de proposer aux acteurs du réseau électrique une contribution à l'équilibre du réseau électrique en réduisant ou en consommant à la demande et ainsi recevoir une compensation financière selon des règles établies des mécanismes d'équilibrage du réseau. Les acteurs du réseau électrique comprennent les consommateurs-producteurs d'énergie, le gestionnaire du réseau électrique, le ou les transporteurs d'énergie.

Cependant, il est coûteux en temps et en complexité de traiter individuellement les offres d'énergie électrique des sites clients, ces sites client ayant typiquement des capacités très variables, selon le nombre de charges présentes et la présence éventuelle de sources d'énergie électrique.

Il est donc utile de disposer d'une plateforme d'agrégation, capable d'agréger les offres de fourniture de puissance électrique en provenance de plusieurs sites client, sur une période donnée, en fonction des prévisions de non consommation et/ou de production électrique de ces sites client, afin de fournir une offre significative à un acteur du réseau électrique.

Grâce à une telle plateforme d'agrégation un distributeur d'électricité pourra effectuer la gestion et la distribution de l'énergie électrique de manière efficace.

Le document US2008/0281663 décrit un procédé de planification de la décharge de diverses charges connectées permettant de répondre à des requêtes de fourniture d'énergie.

L'invention s'inscrit plus particulièrement dans ce contexte et a pour objectif de proposer un procédé et un dispositif de fourniture d'offre agrégée d'énergie électrique.

A cet effet, l'invention propose, selon un premier aspect, un procédé de fourniture d'offres agrégées d'énergie électrique, chaque offre d'énergie électrique étant définie par une puissance et une durée dans un intervalle de temps prédéterminé, à partir d'une pluralité de charges et/ou de sources de sites clients d'un réseau électrique, chaque site client étant apte, pour l'intervalle de temps prédéterminé, à proposer au moins une offre élémentaire de réduction ou de fourniture de puissance électrique ayant une durée associée, correspondant à une réduction de consommation de puissance électrique d'une charge du site ou à une fourniture d'énergie électrique par une source d'énergie électrique du site tel que revendiqué dans la revendication 1.

Avantageusement, le procédé de l'invention met en oeuvre une méthode d'optimisation de remplissage spatial pour un rangement spatial des blocs élémentaires de puissance électrique, résultant en la détermination d'une offre agrégée d'énergie électrique de manière efficace et optimisée par rapport aux multiples offres élémentaires en provenance des divers sites clients. L'optimisation du remplissage spatial a l'avantage de minimiser les déficits de fourniture d'énergie électrique dans le bloc agrégé ainsi formé, ces déficits correspondant aux surfaces sans remplissage ou « trous » du rangement spatial.

Le procédé de fourniture d'offre agrégée d'énergie électrique selon l'invention peut également présenter une ou plusieurs des caractéristiques récitées dans les revendications dépendantes, prises isolément ou selon toutes les combinaisons techniquement possibles.

Selon un deuxième aspect, l'invention concerne un dispositif de fourniture d'offres agrégées d'énergie électrique tel que revendiqué, chaque offre d'énergie électrique étant définie par une puissance et une durée dans un intervalle de temps prédéterminé, à partir d'une pluralité de charges et/ou de sources de sites clients d'un réseau électrique, chaque site client étant apte, pour l'intervalle de temps prédéterminé, à proposer au moins une offre élémentaire de réduction ou de fourniture de puissance électrique ayant une durée associée, correspondant à une réduction de consommation de puissance électrique d'une charge du site ou à une fourniture d'énergie électrique par une source d'énergie électrique du site.

En outre, le dispositif de fourniture d'offres agrégées d'énergie électrique comporte des moyens pour la mise en oeuvre du procédé de fourniture d'offres agrégées d'énergie électrique selon toutes les caractéristiques brièvement décrites ci-dessus.

Selon un autre aspect, l'invention concerne l'utilisation du procédé de fourniture d'offres agrégées d'énergie électrique tel que brièvement décrit ci-dessus dans un système de distribution d'électricité et un procédé de distribution d'électricité associé.

D'autres caractéristiques et avantages de l'invention ressortiront de la description qui en est donnée ci-dessous, à titre indicatif et nullement limitatif, en référence aux figures annexées, parmi lesquelles :

- la figure 1 représente schématiquement un système de communication entre producteurs-consommateurs et systèmes de pilotage du réseau électrique ;
- la figure 2 est un synoptique des principales étapes d'un procédé de fourniture d'une offre agrégée d'énergie électrique pour un intervalle de temps prédéterminé selon un mode de réalisation de l'invention ;
- la figure 3 est un exemple schématique de bloc agrégé obtenu ;
- la figure 4 illustre les étapes d'une première variante de mise en oeuvre correspondant à une première contrainte à respecter ;
- la figure 5 illustre les étapes d'une deuxième variante de mise en oeuvre correspondant à une deuxième contrainte à respecter ;
- la figure 6 illustre les étapes d'une troisième variante de mise en oeuvre correspondant à une troisième contrainte à respecter ;
- la figure 7 est un synoptique des principales étapes d'une mise à jour de l'offre agrégée d'énergie électrique selon un mode de réalisation de l'invention.

L'invention sera décrite ci-après dans le cadre d'un réseau électrique.

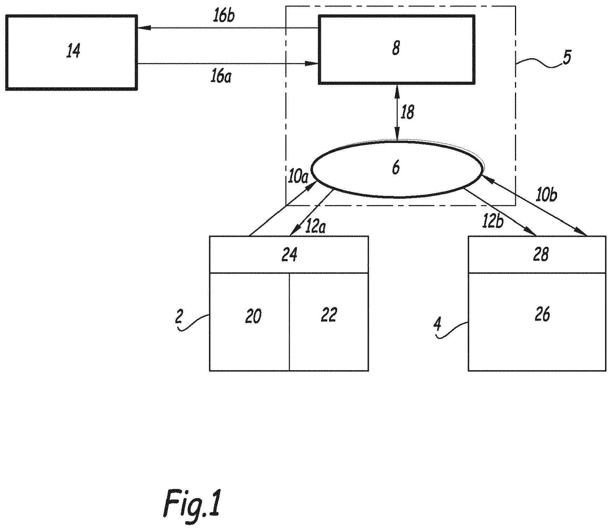

La figure 1 représente schématiquement un système 1 de communication des sites clients consommateurs-producteurs d'électricité avec les systèmes de pilotage du réseau électrique, comprenant une pluralité de sites clients 2, 4, une plateforme de services énergétiques 5, comprenant une plateforme de collecte et d'optimisation 6 et une plateforme d'agrégation 8. La plateforme de services énergétiques 5 est en communication avec un système d'information agrégateur 14.

Chaque site client 2, 4, producteur-consommateur d'électricité, comprend un contrôleur local et une interface 24 et 28, et des charges et/ou des sources d'énergie électrique 20, 22, 26, appelées simplement sources ci-après, comme décrit plus en détail ci-après.

Seuls deux sites clients 2, 4 sont illustrés pour faciliter l'explication, mais l'invention s'applique à l'évidence à un nombre quelconque de sites clients.

La plateforme de collecte et d'optimisation 6 comprend des moyens de communication, par exemple des moyens de communication sans fil, servant d'interface entre les sites clients 2, 4 et la plateforme d'agrégation 8.

La plateforme de collecte et d'optimisation 6 est apte à recevoir des données contenant des informations 10a, 10b élémentaires de fourniture de puissance électrique de la part des sites clients, à renvoyer vers les sites clients des ordres de pilotage 12a, 12b des charges et des sources en fonction de demandes de fourniture de puissance élémentaire ou de réduction de puissance, en provenance de la plateforme d'agrégation 8.

De plus, la plateforme 6 calcule des offres élémentaires de puissance, sur la base de données météorologiques ou de mesures issues des sites client et archivées par la plateforme.

D'autre part, la plateforme de collecte et d'optimisation 6 est apte à échanger des informations 18 avec la plateforme d'agrégation 8, en particulier à envoyer vers la plateforme d'agrégation les offres élémentaires de puissance électrique calculées et de recevoir de la plateforme d'agrégation 8 des ordres de réduction de puissance ou de fourniture de puissance.

Les diverses informations sont échangées sous forme de messages formatés selon un protocole de communication dans un réseau électrique prédéfini.

L'agrégateur 14 communique avec la plateforme de services énergétiques 5 en utilisant le protocole OPENADR (pour « *Open Automated Demand Response* »).

La plateforme 6 communique avec les sites clients 2, 4, soit par l'intermédiaire du protocole OPENADR, soit par l'intermédiaire d'un protocole propriétaire.

Entre la plateforme de collecte et d'optimisation 6 et la plateforme d'agrégation 8 les échanges se font par des communications de type Webservices.

La plateforme d'agrégation 8 est apte à communiquer avec le système d'information agrégateur 14 du réseau électrique, appelé agrégateur par la suite.

Par exemple, l'agrégateur demande, via un message 16a, des offres de réduction ou d'augmentation de puissance P_c et de durée D_c, qui sont respectivement les consignes de puissance et de durée, pendant une période de temps prédéterminée, par exemple pour les prochaines 24h.

En réponse, la plateforme d'agrégation 8 calcule et envoie à l'agrégateur 14 des offres 16b de puissance électrique, correspondant à une agrégation d'offres de puissance électrique élémentaires calculées à partir des capacités de fourniture des sites client 2, 4.

L'agrégateur 14 a la possibilité d'accepter ou de refuser une offre 16b fournie par la plateforme d'agrégation 8. En cas d'acceptation, la plateforme d'agrégation 8 et la plateforme de collecte et d'optimisation 6 désagrègent l'offre 16b acceptée en offres élémentaires, et la plateforme de collecte et d'optimisation 6 transmet les ordres de fourniture et/ou de réduction de puissance correspondants aux sites clients.

Dans l'exemple de la figure 1, l'installation électrique du site client 2 comprend des charges 20, des sources d'énergie électrique 22, et une interface 24, apte à recevoir les ordres de pilotage 12a de la plateforme de collecte et d'optimisation 6 et à les transformer en ordres de pilotage effectifs des charges 20 et des sources d'énergie électrique 22 locales.

Par exemple, les charges font partie d'un système de climatisation et de chauffage, également connu sous l'acronyme HVAC pour *Heating Ventilation and Air Conditioning.* L'interface 24 est apte à piloter les charges HVAC soit directement, soit au travers d'un module de pilotage BMS (« *Building Management System »*).

La source d'énergie électrique 22 est par exemple un système de stockage d'énergie, par exemple un groupe électrogène, ou un ensemble de batteries aptes à stocker l'énergie électrique. Dans ce cas, le module de pilotage associé est un automate programmable.

Dans l'exemple illustré en figure 1, le site client 4 comprend seulement un ensemble de charges électriques 26, pilotées par l'interface 28.

La plateforme de collecte et d'optimisation 6 est apte à estimer les offres de fourniture de puissance élémentaires selon un plan d'optimisation des sources et des charges (consommation/production), disponibles pendant une partie d'une période de temps T prédéterminée, par exemple dans les 24 heures suivant une heure de début $T_0$ correspondant à la date à laquelle le calcul prévisionnel est effectué.

Plus généralement, la période de temps prédéterminée T est un paramètre dont la valeur est quelconque, et est fixée selon les besoins ponctuels.

Par exemple, dans le cas de charges d'un système de climatisation et de chauffage, des paramètres tels que le planning d'occupation des lieux, les consignes de température, la prévision de température extérieure et d'ensoleillement, le modèle thermique du bâtiment et le planning tarifaire sont utilisés.

A partir des courbes de charge prévisionnelles de consommation/production, il est possible de déterminer des marges de fonctionnement des charges, d'identifier des réductions de consommation d'énergie électrique et des estimations de production pour la période de temps T considérée, et d'en déduire, pour chaque source ou charge du site client, une ou plusieurs offres élémentaires de fourniture de puissance électrique.

Chaque offre de fourniture puissance élémentaire est définie par une puissance $P_e$ et une durée $D_e$, et est valide dans un intervalle de temps prédéterminé $I_e$, cet intervalle de temps $I_e$ s'inscrivant dans la période de temps T prédéterminée pour laquelle le calcul prévisionnel est effectué.

Par exemple, une charge telle qu'une installation HVAC peut être mise en arrêt entre 9 heures et 10 heures du matin, pour une réduction d'énergie consommée donnée pendant cette heure.

La plateforme d'agrégation 8 peut produire une ou plusieurs offres agrégées de fourniture-réduction ou de stimulation de puissance, après que la plateforme de collecte et d'optimisation 6 ait calculé des offres élémentaires de réduction ou de stimulation de puissance issues des informations 10a, 10b.

La plateforme d'agrégation 8 est apte à élaborer une ou plusieurs offres agrégées d'énergie électrique, respectant au moins la puissance de consigne P_c ou la durée de consigne D_c, par exemple une puissance de l'ordre de plusieurs centaines de kilowatts kW pendant une heure, voire d'un MegaWatt, pendant 1heure, pour ensuite proposer ces offres agrégées d'énergie électrique à l'agrégateur 14.

Ainsi, la plateforme de services énergétiques 5 a un rôle d'intermédiaire entre les sites client 2, 4 et l'agrégateur 14.

Avantageusement, les offres de puissance électrique des sites client sont mieux valorisées de par leur regroupement, ce qui permet aux sites client et donc aux consommateurs finaux de mieux les valoriser financièrement.

De plus, la gestion du réseau électrique gagne en souplesse, la redistribution des puissances électriques non consommées ou produites par les sites clients permettant d'améliorer la capacité de gestion en cas de surcharge globale du réseau électrique, par exemple en période de pointe en cas de forte surconsommation électrique.

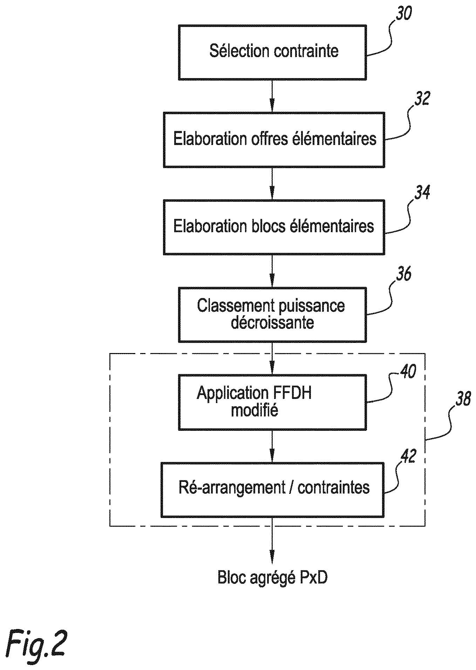

La figure 2 montre les principales étapes d'un procédé de fourniture d'une offre agrégée d'énergie électrique dans un mode de réalisation de l'invention.

Le procédé est mis en oeuvre par un dispositif de fourniture d'offre agrégée d'énergie électrique, mis en oeuvre par la plateforme de services énergétiques 5, comportant des moyens de calcul numérique, par exemple un ou plusieurs processeurs, ainsi que des mémoires associées.

Lors d'une première étape 30 de sélection d'une contrainte, une contrainte à respecter est sélectionnée, parmi les variantes suivantes : (a) respect de la puissance de consigne P_c et d'un critère de qualité, (b) respect de la durée de consigne D_c et d'un critère de qualité, (c) respect à la fois de la puissance de consigne P_c et de la durée de consigne D_c, ainsi que d'un critère de qualité.

Lors d'une étape 32 d'élaboration d'offres élémentaires de puissance, des offres élémentaires de fourniture de puissance électrique sont élaborées en fonction des informations en provenance de sites clients.

Optionnellement, lors de cette étape 32 d'élaboration d'offres élémentaires, une sélection des offres élémentaires de fourniture de puissance électrique est mise en oeuvre, en fonction d'un ou plusieurs critères tels que :

- la disponibilité de l'offre pendant une fraction de la période de temps T prédéterminée,
- le nombre de contributions récentes du site client ou des charges proposant l'offre, permettant ainsi de répartir la contribution des divers sites client, par exemple par un système de comptage du nombre de contributions sur une période temporelle glissante,
- la localisation du site client dont provient l'offre, afin de sélectionner les offres les plus proches géographiquement de la partie du réseau à sauvegarder,

- le type d'offre de fourniture de puissance ou le type d'énergie électrique, permettant ainsi par exemple de favoriser les sources d'énergie écologiques.

En variante, l'étape d'élaboration des offres de puissance est effectuée préalablement à la mise en oeuvre de procédé d'agrégation, et l'étape 32 devient une étape de récupération des offres de puissance.

Ensuite, une étape 34 de représentation des offres de fourniture de puissance électrique, reçues ou retenues lors de l'étape d'élaboration ou de récupération d'offres élémentaires 32, par des blocs élémentaires d'énergie électrique bidimensionnels $BE_i$, appelés ci-après blocs élémentaires, chaque bloc élémentaire $BE_i$ étant défini par une durée $DE_i$ et une puissance électrique $PE_i$ associée.

Les blocs élémentaires sont triés par ordre de puissance décroissante lors d'une étape de tri 36.

Les blocs élémentaires $BE_i$ sont ensuite rangés par une méthode de remplissage spatial optimisé lors d'une étape de rangement spatial 38.

On obtient un bloc agrégé, de dimensions puissance P et durée D, respectant la contrainte sélectionnée à l'étape 30.

L'étape de rangement spatial optimisé 38 comprend une sous-étape 40 d'application d'une méthode de rangement spatial modifiée pour autoriser des dépassements par rapport aux dimensions du container initial, qui est un bloc maximal de dimensions puissance maximale $P_{max}$, durée maximale $D_{max}$.

De préférence, une méthode de remplissage spatial choisie dans la classe de méthodes appelées « *Bin packing* » est utilisée.

Dans un mode de réalisation, un algorithme FFDH (« First-Fit Decreasing Height ») modifié est appliqué.

Ce type de méthodes est connu dans le domaine du rangement spatial optimisé d'objets dans des containers de dimensions prédéterminées, permettant de minimiser les surfaces sans remplissage ou trous, qui correspondent, dans le cas présent, à des déficits de fourniture d'énergie électrique.

Dans le mode de réalisation préféré, pour l'application de l'algorithme FFDH, la dimension puissance est la hauteur des blocs élémentaires. Le rangement des blocs élémentaires se fait sans rotation, pour respecter les dimensions respectives associées à la puissance (hauteur d'un bloc élémentaire) et à la durée (largeur d'un bloc élémentaire).

L'étape 40 comporte un rangement des blocs élémentaires par niveaux de puissance successifs, chaque niveau de puissance correspondant à un « étage » du rangement spatial.

Le container ou bloc maximal a des dimensions initiales $D_{max}$, $P_{max}$, supérieures ou égales aux valeurs de consigne.

Cependant, à la différence d'un algorithme de rangement spatial « *Bin packing* » conventionnel, un dépassement dans la dimension horizontale, correspondant à la durée de chaque niveau de puissance, est autorisé.

Si un bloc élémentaire dépasse $D_{max}$ de plus d'un pourcentage Perc1 de sa propre durée, de préférence égal à 50%, alors le bloc élémentaire est rejeté et un autre bloc élémentaire, dans l'ordre obtenu après l'étape de tri 36, est considéré.

L'étape de remplissage spatial 40 est suivie d'une étape 42 de réarrangement et/ou de re-découpage en fonction de la contrainte choisie.

Plusieurs modes de réalisation de l'étape de réarrangement et/ou de re-découpage 42 sont envisagés, comme explicité ci-après.

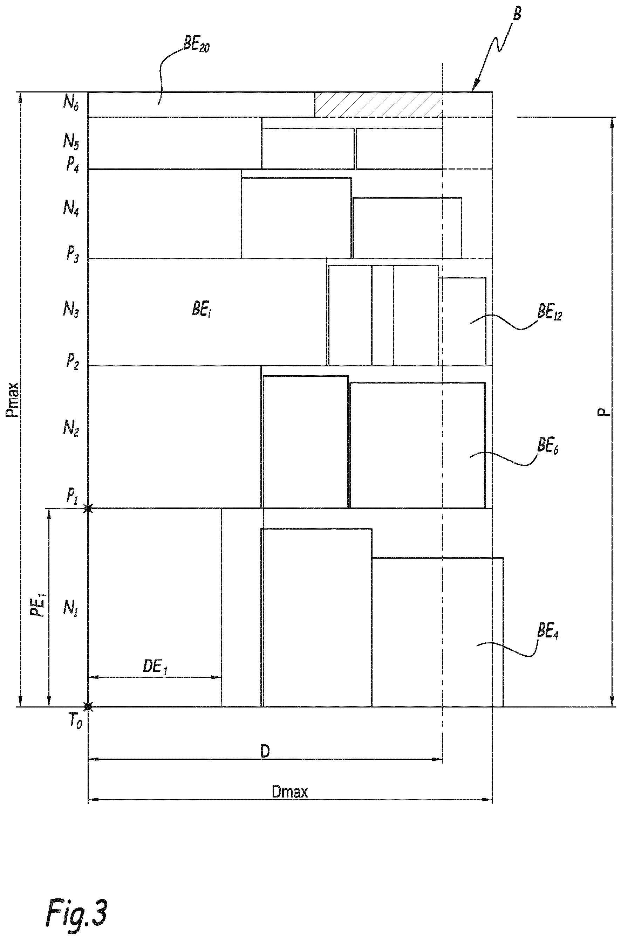

En sortie de l'étape de rangement spatial optimisé 38, un bloc agrégé B de puissance maximale P et de durée D est obtenu, comme illustré par un exemple à la figure 3.

Dans cet exemple, le bloc agrégé B comprend une pluralité de blocs élémentaires $BE_i$, rangés par niveaux $N_1$ à $N_6$ de hauteur décroissante, la hauteur correspondant à la puissance. On note $P_i$ la puissance maximale du niveau de puissance $N_i$.

Par exemple, dans la figure 3, le premier niveau de puissance $N_1$ a une hauteur égale à $PE_1$ qui est la hauteur maximale des blocs élémentaires du niveau.

Comme on peut le voir sur la figure 3, le bloc agrégé B obtenu a une surface totale $P \times D$ et comporte des surfaces non remplies, ou « trous » de puissance, chaque surface sans remplissage correspondant à un déficit de puissance fournie.

Ainsi, certains niveaux de puissance peuvent présenter un déficit de puissance, égal à la surface des « trous » présents dans le niveau de puissance.

Le déficit de puissance total dans le bloc agrégé est égal à la somme des déficits de puissance pour les niveaux de puissances respectifs.

Le niveau de puissance fourni réellement, correspondant à une puissance électrique effective $P_{effective}$ qui peut être fournie par l'ensemble des blocs élémentaires agrégés pendant la durée $D_{max}$ est, dans le cas général, inférieur ou égal au niveau de puissance maximal correspondant à la puissance électrique maximale $P_{max}$.

Avantageusement, on définit un critère de qualité qui limite le déficit de puissance à un pourcentage Perc3 de la puissance totale à ne pas dépasser. De préférence, Perc3=5%. N'importe quel pourcentage, entre 0 et 100%, peut être envisagé.

Selon une première variante, la contrainte à respecter impose le respect de la puissance de consigne $P\_c$ et du critère de qualité relatif à la limitation du déficit de puissance défini ci-dessus, le respect de la consigne de durée $D\_c$ n'étant pas prioritaire.

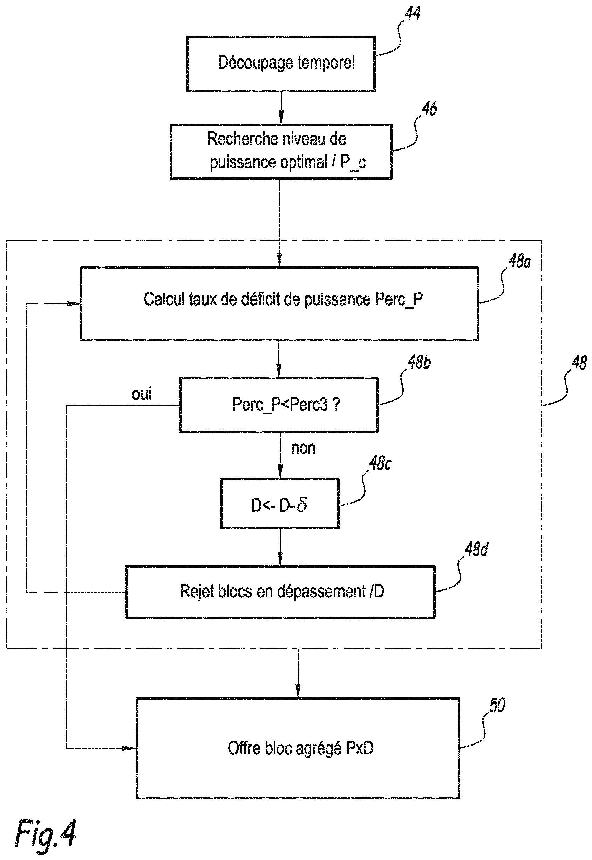

L'étape 42 de réarrangement et/ou de re-découpage en fonction de la contrainte choisie selon cette première variante comprend les sous-étapes illustrées schématiquement à la figure 4.

Lors d'une première étape 44 de découpage temporel, les blocs élémentaires qui dépassent $D_{max}$ sont recoupés temporellement de sorte à obtenir un bloc agrégé de durée $D_{max}$.

Dans ce mode de réalisation, $D_{max}=D\_c$.

Ensuite, un niveau de puissance correspondant à la puissance de consigne $P\_c$ est recherché à l'étape 46 de recherche d'un niveau de puissance optimal.

Les blocs du niveau de puissance $N_i$ ont une amplitude maximale de puissance égale à $P_i-P_{i-1}$.

Lorsque la puissance de consigne $P\_c$ est comprise entre $P_{l-1}$ et $P_l$, on retient le niveau de puissance le plus proche de $P\_c$ de la manière suivante :

Si $(P_{l-1} + P_l)/2 \leq P\_c \leq P_l$ alors le niveau de puissance $N_l$ est conservé, $P = P_l$.

Si $P_{l-1} \leq P\_c < (P_{l-1} + P_l)/2$ alors le niveau de puissance $N_{l-1}$ est conservé, $P= P_{l-1}$.

La puissance associée au niveau retenu est la puissance du bloc agrégé en sortie de l'étape 46 de recherche d'un niveau de puissance optimal.

Ainsi, en sortie de l'étape 46, le bloc agrégé a une puissance P et une durée $D_{max}$.

L'étape 46 est suivie d'une étape 48 de minimisation du déficit de puissance.

Lors de cette étape, la satisfaction du critère de qualité est assurée.

Au départ, la durée du bloc agrégé est $D=D_{max}$.

Lors de l'étape 48, le taux de déficit de puissance du bloc agrégé, noté Perc_P est calculé (sous-étape 48a), et si ce déficit ne satisfait par le critère de qualité définie par le pourcentage maximal de déficit Perc3 (vérification de la sous-étape 48b), la durée du bloc est réduite d'une quantité $\delta$, par exemple $\delta= 1$ minute (sous-étape 48c).

Selon un mode de réalisation, pour une durée D donnée, le taux de déficit de puissance est calculé pour chaque niveau de puissance et additionné pour vérifier la satisfaction ou non du critère.

De plus, après avoir décrémenté la durée D, il est vérifié (sous-étape 48d), si un bloc élémentaire dépasse D de plus d'un pourcentage Perc1 de sa propre durée, de préférence Perc1 =50%. En cas de vérification positive, le bloc élémentaire est rejeté et remplacé par un autre bloc élémentaire.

Les sous-étapes 48a à 48d sont itérées jusqu'à ce que le critère de qualité soit satisfait, pour une durée D.

En sortie, on obtient un bloc agrégé de puissance maximale P et de durée D, la puissance P correspondant au niveau de puissance le plus proche de la puissance de consigne $P\_c$, et la durée D pouvant être inférieure à la durée de consigne $D\_c$, étant néanmoins assuré que le bloc agrégé satisfait au critère de limitation du déficit de puissance à un pourcentage inférieur ou égal à Perc3 par rapport à la puissance P.

Une offre constituée d'un bloc agrégé de dimensions PxD est émise lors de l'étape d'émission d'offre 50.

Selon une deuxième variante, la contrainte à respecter impose le respect de la puissance de durée $D\_c$ et du critère de qualité défini ci-dessus, le respect de la consigne de puissance $P\_c$ n'étant pas prioritaire.

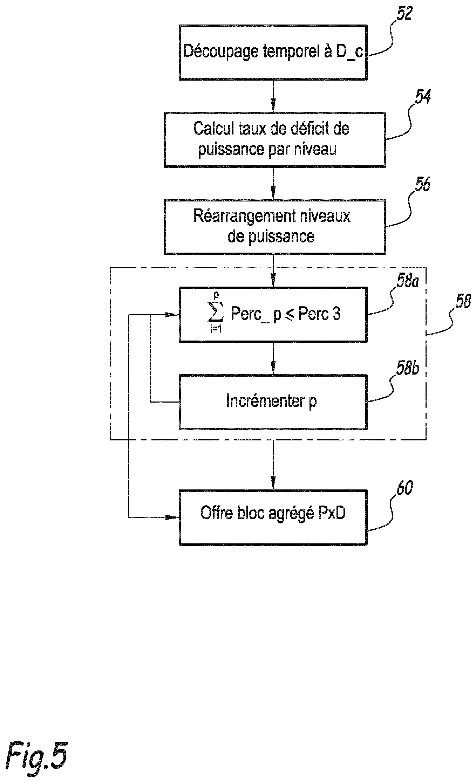

L'étape 42 de réarrangement et/ou de re-découpage en fonction de la contrainte choisie selon cette deuxième variante comprend les sous-étapes illustrées schématiquement à la figure 5.

Lors d'une première étape de découpage temporel 52, les blocs élémentaires qui dépassent $D\_c$ sont recoupés temporellement de sorte à obtenir un bloc agrégé de durée $D\_c$. La durée $D\_c$ du bloc agrégé n'est pas modifiée par la suite, donc $D=D\_c$ pour le bloc agrégé.

Ensuite, lors d'une étape 54 de calcul de déficit de puissance, le taux de déficit de puissance Perc_i est calculé pour chaque niveau de puissance $N_i$.

Ensuite, lors d'une étape 56 de réarrangement des niveaux de puissance, les niveaux de puissance sont triés par taux de déficit de puissance croissant, le bloc agrégé obtenu par agrégation du ou des niveaux de puissance comportant le moins de déficit jusqu'aux niveaux de puissance comportant le plus de déficit de puissance.

En sortie de l'étape 56, un bloc agrégé de dimensions puissance $P_{max}$ et durée $D\_c$ est obtenu.

Finalement, lors d'une étape suivante 58, on recherche la puissance P, correspondant au niveau de puissance N le plus élevé du bloc agrégé obtenu à l'étape 56 pour lequel le critère de déficit de puissance est vérifié.

Lors d'une sous-étape de vérification 58a, en partant de p=1, on vérifie le critère de qualité:

$$\sum_{i=1}^{p} Perc\_p \leq Perc3$$

En cas de vérification positive, on retient $N = N_p$ et on incrémente p $p = p + 1$ lors d'une sous-étape 58b, et on retourne à la vérification 58a.

La boucle s'arrête lorsqu'on atteint un niveau de puissance $N_{L+1}$ pour lequel la somme des taux de déficit dépasse Perc3.

On a obtenu alors le dernier niveau de puissance $N_L$ pour lequel le critère de qualité est respecté. La puissance maximale de ce niveau de puissance $N_L$ est la puissance $P_L$ du bloc agrégé final.

Le bloc agrégé final a des dimensions puissance $P=P_L$, et durée $D=D\_c$.

Lors de l'étape 60, une offre constituée d'un bloc agrégé de dimensions PxD est émise.

Selon une troisième variante, la contrainte à respecter impose le respect à la fois de la puissance de consigne $P\_c$ et de la durée de consigne $D\_c$, ainsi que d'un critère de qualité.

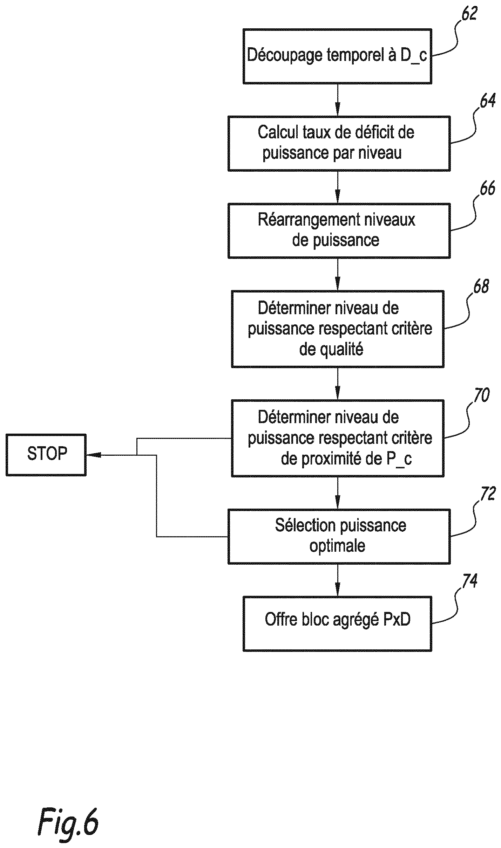

L'étape 42 de réarrangement et/ou de re-découpage en fonction de la contrainte choisie selon cette troisième variante comprend les sous-étapes illustrées schématiquement à la figure 6.

Lors d'une première étape 62, les blocs élémentaires qui dépassent D_c sont recoupés temporellement de sorte à obtenir un bloc agrégé de durée D_c.

Ensuite, lors d'une étape 64 de calcul de déficit de puissance, le taux de déficit de puissance Perc_i est calculé pour chaque niveau de puissance $N_i$.

Ensuite, lors d'une étape 66 de réarrangement des niveaux de puissance, analogue à l'étape 56 précédemment décrite, les niveaux de puissance sont triés par taux de déficit de puissance croissant.

En sortie de l'étape 66, un bloc agrégé de dimensions puissance $P_{max}$ et durée D_c est obtenu.

Lors d'une étape suivante 68, analogue à l'étape 58 précédemment décrite, on recherche le niveau de puissance $P_L$, correspondant au niveau de puissance $N_L$ le plus élevé du bloc agrégé obtenu à l'étape 66 pour lequel le critère de déficit de puissance est vérifié.

A l'étape 70 on cherche le ou les niveaux de puissance, parmi les niveaux retenus, dont la puissance satisfait un critère de proximité par rapport à la puissance de consigne P_c donné par:

$$\left| P_i - P\_c \right| \leq Perc2 \times P\_c$$

Avec Perc2 de préférence égal à 10%.

Si aucun niveau de puissance ne satisfait cette relation, alors le procédé prend fin sans émission d'offre agrégée.

Si au moins un niveau $N_i$ de puissance $P_i$ correspond, on vérifie à l'étape 72 de sélection de puissance optimale si $P_i \geq P\_c$, et en cas de vérification positive, on retient la puissance finale du bloc agrégé $P = P_i$.

Si $P_i < P\_c$, on recherche, parmi les niveaux de puissance supérieurs à $N_i$, s'il existe un niveau de puissance supérieure ou égale à P_c qui satisfaisant au critère de qualité et au critère de proximité.

Si un tel niveau de puissance $N_q$ de puissance $P_q$ est trouvé, alors $P = P_q$ est la puissance retenue pour le bloc agrégé final.

Lors de l'étape 74, une offre constituée d'un bloc agrégé de dimensions PxD est émise, la durée D étant égale à la durée D_c et la puissance P étant la puissance du niveau de puissance sélectionné lors de l'étape 72 comme expliqué ci-dessus.

Si aucun niveau de puissance satisfaisant les critères n'est trouvé, alors le procédé prend fin sans émission d'offre agrégée.

En variante, la durée du bloc agrégé est également ajustée dans une certaine marge pour chercher à valider le critère de qualité.

Ainsi, grâce à l'agrégation, le dispositif selon l'invention est apte à grouper les offres de plusieurs sites clients et à transmettre une offre d'énergie de puissance suffisante à l'agrégateur 14, alors que les offres élémentaires de fourniture de puissance électrique transmises par les sites clients séparément ne répondent pas aux contraintes imposées par l'agrégateur.

L'offre agrégée de fourniture de bloc élémentaire d'énergie électrique est issue de la flexibilité associée aux prévisions de production/consommation d'énergie électrique par les sites clients pour une période de temps T prédéterminée, par exemple pour une période de 24 heures à partir d'une date $T_0$ donnée.

Cependant, les prévisions de production/consommation par site client peuvent subir des modifications au courant de la période de temps prédéterminée T cible, par exemple du fait de l'évolution de conditions de fonctionnement comme l'évolution météorologique pour un système de climatisation et de chauffage, ou pour une source d'énergie comportant des panneaux photovoltaïques.

Il est utile de valider et modifier le cas échéant l'offre agrégée d'énergie électrique, à intervalles de temps réguliers, par exemple toutes les heures pour une période de temps prédéterminée T de 24 heures.

En cas d'acception de l'offre de bloc agrégé il est utile de réajuster le contenu du bloc agrégé pour garantir la puissance P_c et la durée D_c contractées.

Les offres évoluent avec les conditions météorologiques et peuvent subir une érosion en puissance il faut donc les réajuster régulièrement de sorte à être en mesure de respecter le contrat passé.

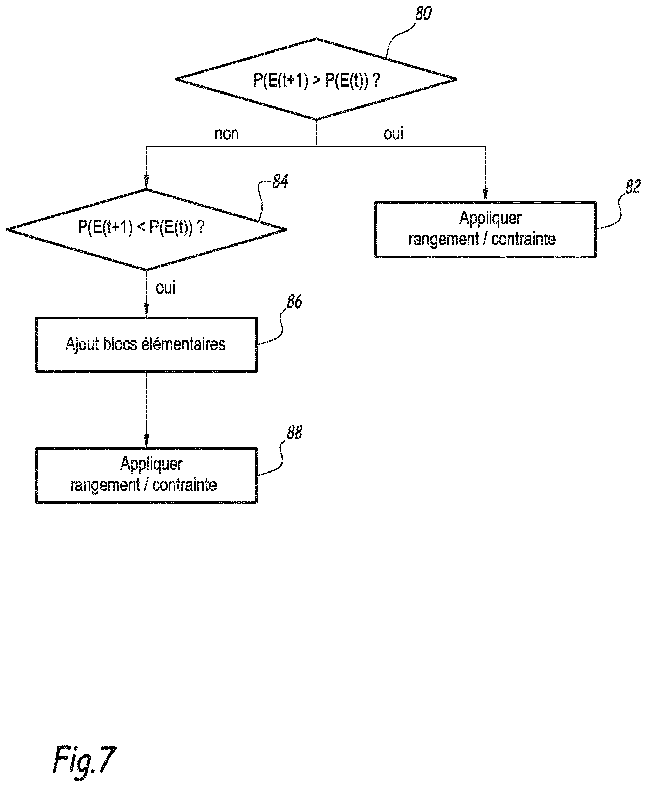

La figure 7 présente un synoptique des principales étapes d'une mise à jour de l'offre agrégée d'énergie électrique selon un mode de réalisation de l'invention, cette étape de mise à jour étant effectuée à intervalles de temps réguliers, par exemple toutes les 15 minutes.

Lors d'une première étape de comparaison 80, la puissance électrique effective fournie à un instant temporel futur t+1 par le bloc agrégé, noté P(E(t+1)) est comparée à la puissance électrique effective fournie à un instant temporel t courant P(E(t)).

Si la puissance P(E(t+1)) est supérieure à P(Et()), alors la puissance est ajustée pour répondre à la contrainte préalablement sélectionnée, selon l'une des variantes décrites précédemment, lors d'une étape 82. Il est à noter que certains blocs élémentaires retenus à l'instant temporel t ne le sont plus nécessairement à l'instant temporel t+1.

Si la puissance P(E(t+1)) est inférieure ou égale à la puissance P(E(t)), alors il est vérifié lors d'une étape 84 si la puissance P(E(t+1)) est strictement inférieure à P(E(t)).

En cas de réponse négative à l'étape 84, il en est déduit que les puissances effectives aux instants respectifs t et t+1 sont égaux, donc aucune action n'est nécessaire.

En cas de réponse positive à l'étape 84, donc si la puissance P(E(t+1)) est strictement inférieure à P(E(t)), l'étape 84 est suivie d'une étape 86 d'ajout de blocs élémentaires.

Les blocs élémentaires précédemment définis sont conservés de sorte à éviter les modifications des plannings d'utilisation des charges des sites. D'autres blocs élémentaires sont sélectionnés pour combler le déficit de puissance par rapport à la puissance souhaitée, pendant la durée D_c.

Ensuite, l'une des variantes décrites précédemment est appliquée à l'étape 88, de sorte à respecter la contrainte préalablement sélectionnée.

## Revendications

1. Procédé de fourniture d'offres agrégées d'énergie électrique, chaque offre d'énergie électrique étant définie par une puissance et une durée dans un intervalle de temps prédéterminé, à partir d'une pluralité de charges et/ou de sources de sites clients (2,4) d'un réseau électrique, chaque site client étant apte, pour l'intervalle de temps prédéterminé, à proposer au moins une offre élémentaire de réduction ou de fourniture de puissance électrique ayant une durée associée, correspondant à une réduction de consommation de puissance électrique d'une charge (20, 26) du site ou à une fourniture d'énergie électrique par une source (22) d'énergie électrique du site, mis en oeuvre par un ou plusieurs processeur(s), comportant les étapes de :

    - réception d'informations relatives à une fourniture de puissance électrique issue des charges et/ou des sources de chaque site client, et détermination (34), pour chaque site client, d'au moins un bloc élémentaire de puissance électrique, chaque bloc élémentaire ($BE_i$) de puissance étant défini en deux dimensions par une durée ($DE_i$) et une puissance électrique ($PE_i$) associées ;
    - rangement spatial (36, 38) de blocs élémentaires de puissance pour obtenir un bloc agrégé défini par une puissance électrique (P) et une durée (D), ladite puissance électrique et/ou ladite durée du bloc agrégé respectant une contrainte sélectionnée parmi une puissance de consigne (P_c) ou une durée de consigne (D_c),

    l'étape de rangement spatial mettant en oeuvre (40) une méthode d'optimisation de remplissage spatial d'un bloc, défini par une puissance maximale ($P_{max}$) et une durée maximale ($D_{max}$), par des blocs élémentaires, **caractérisé en ce qu'**il comporte, après la mise en oeuvre de la méthode d'optimisation de remplissage spatial, une étape de réarrangement et/ou de re-découpage (42) pour obtenir un bloc agrégé en fonction de la contrainte sélectionnée, dans laquelle la contrainte à respecter impose en outre le respect d'un critère de qualité qui limite un déficit de puissance à un pourcentage de la puissance électrique du bloc agrégé.

2. Procédé selon la revendication 1, **caractérisé en ce que** la méthode d'optimisation de remplissage spatial est une méthode de remplissage par niveaux de puissance de hauteur décroissante, la hauteur de chaque niveau de puissance correspondant à la puissance d'un bloc élémentaire appartenant audit niveau de puissance.

3. Procédé selon la revendication 2, **caractérisé en ce qu'**il comporte, préalablement à la mise en oeuvre de la méthode d'optimisation de remplissage spatial, une étape de classement (36) desdits blocs élémentaires par puissance décroissante.

4. Procédé selon l'une quelconque des revendications 1 à 3, **caractérisé en ce que** la méthode d'optimisation de remplissage spatial est modifiée pour autoriser un dépassement selon au moins une des dimensions de durée maximale ($D_{max}$) ou de puissance maximale ($P_{max}$) du bloc à remplir.

5. Procédé selon la revendication 4, **caractérisé en ce qu'**il comprend en outre une étape d'ajustement du bloc agrégé par rejet d'un bloc élémentaire dépassant la durée (D) du bloc agrégé, le dépassement de durée dudit bloc élémentaire étant supérieur ou égal à un pourcentage prédéterminé de la durée dudit bloc élémentaire.

6. Procédé selon l'une des revendications 1 à 5, dans lequel le rangement spatial de blocs élémentaires met en oeuvre une pluralité de niveaux de puissance, rangés en fonction de leur hauteur, **caractérisé en ce qu'**il comporte une étape (46) de recherche d'un niveau de puissance dont la puissance associée est la plus proche de la valeur de puissance de consigne (P_c).

7. Procédé selon la revendication 6 **caractérisé en ce qu'**il comporte une étape (48) de minimisation du déficit de puissance du bloc agrégé, comportant une diminution progressive de la durée (D) du bloc agrégé jusqu'à ce que la surface sans remplissage dudit bloc agrégé soit inférieure ou égale à un pourcentage prédéterminé de la surface totale du bloc agrégé, permettant d'assurer un taux de déficit de puissance inférieur à une valeur prédéterminée.

8. Procédé selon l'une des revendications 1 à 5, dans lequel le rangement spatial de blocs élémentaires met en oeuvre une pluralité de niveaux de puissance, rangés en fonction de leur hauteur, **caractérisé en ce qu'**il comporte une étape (54) de calcul d'un taux de déficit de puissance par niveau de puissance, égal à un taux de surface sans remplissage dudit niveau de puissance, et un réarrangement (56) des niveaux de puissance dans un ordre croissant du taux de déficit de puissance par niveau de puissance.

**9.** Procédé selon la revendication 8, **caractérisé en ce qu'**il comprend, après ledit réarrangement (56) des niveaux de puissance, une détermination (58) du niveau de puissance le plus élevé pour lequel le critère de qualité relatif au déficit total de puissance est respecté.

**10.** Procédé selon la revendication 9, **caractérisé en ce qu'**il comprend, en outre, une étape de détermination (70) d'au moins un niveau de puissance respectant un critère de proximité par rapport à la puissance de consigne (P_c), et une sélection (72) d'une puissance dudit bloc agrégé respectant à la fois ledit critère de proximité par rapport à la puissance de consigne et ledit critère de qualité relatif au déficit total de puissance.

**11.** Procédé selon l'une quelconque des revendications 1 à 10, **caractérisé en ce qu'**il comprend une étape de mise à jour (80-88) du bloc agrégé déterminé, répétée à des instants temporels réguliers.

**12.** Dispositif de fourniture d'offres agrégées d'énergie électrique, chaque offre d'énergie électrique étant définie par une puissance et une durée dans un intervalle de temps prédéterminé, à partir d'une pluralité de charges et/ou de sources de sites clients (2,4) d'un réseau électrique, chaque site client étant apte, pour l'intervalle de temps prédéterminé, à proposer au moins une offre élémentaire de réduction ou de fourniture de puissance électrique ayant une durée associée, correspondant à une réduction de consommation de puissance électrique d'une charge (20, 26) du site ou à une fourniture d'énergie électrique par une source (22) d'énergie électrique du site,
comportant des moyens adaptés à :

- recevoir des informations relatives à une fourniture de puissance électrique issue des charges et/ou des sources de chaque site client, et déterminer, pour chaque site client, d'au moins un bloc élémentaire de puissance électrique, chaque bloc élémentaire (BE$_i$) de puissance étant défini en deux dimensions par une durée (DE$_i$) et une puissance électrique (PE$_i$) associées ;
- effectuer un rangement spatial de blocs élémentaires de puissance pour obtenir un bloc agrégé défini par une puissance électrique (P) et une durée (D), ladite puissance électrique et/ou ladite durée du bloc agrégé respectant une contrainte sélectionnée parmi une puissance de consigne (P_c) ou une durée de consigne (D_c), le rangement spatial mettant en oeuvre une méthode d'optimisation de remplissage spatial d'un bloc, défini par une puissance maximale (P$_{max}$) et une durée maximale (D$_{max}$), par des blocs

élémentaires, **caractérisé en ce que** les moyens sont adaptés à, après la mise en oeuvre de la méthode d'optimisation de remplissage spatial, effectuer un réarrangement et/ou un redécoupage pour obtenir un bloc agrégé en fonction de la contrainte sélectionnée, dans laquelle la contrainte à respecter impose en outre le respect d'un critère de qualité qui limite un déficit de puissance à un pourcentage de la puissance électrique du bloc agrégé.

**Patentansprüche**

**1.** Verfahren zur Lieferung eines Angebots an elektrischer Energie, wobei jedes Angebot an elektrischer Energie durch eine Leistung und eine Dauer in einem vorbestimmten Zeitintervall ausgehend von einer Mehrzahl von Lasten und/oder von Quellen von Kundenstandorten (2, 4) eines Elektrizitätsnetzes definiert ist, wobei jeder Kundenstandort, für das vorbestimmte Zeitintervall, geeignet ist, mindestens ein elementares Angebot zur Reduzierung oder zur Bereitstellung von elektrischer Leistung mit einer zugeordneten Dauer vorzuschlagen, das einer Reduzierung des Verbrauchs elektrischer Leistung einer Last (20, 26) des Standorts oder einer Bereitstellung von elektrischer Energie durch eine Quelle (22) elektrischer Energie des Standorts entspricht, ausgeführt durch einen oder mehrere Prozessor(en), umfassend die Schritte:

- Empfangen von Informationen in Bezug auf eine Bereitstellung von elektrischer Leistung stammend von den Lasten und/oder den Quellen jedes Kundenstandorts und Bestimmen (34), für jeden Kundenstandort, mindestens eines elementaren Blocks elektrischer Leistung, wobei jeder elementare Leistungsblock (BEi) in zwei Dimensionen durch eine zugeordnete Dauer (DEi) und eine zugeordnete elektrische Leistung (PEi) definiert ist;
- räumliches Anordnen (36, 38) von elementaren Leistungsblöcken, um einen aggregierten Block zu erhalten, der durch eine elektrische Leistung (P) und eine Dauer (D) definiert ist, wobei die elektrische Leistung und/oder die Dauer des aggregierten Blocks eine Bedingung einhält, die ausgewählt ist aus einer Sollleistung (P_c) oder einer Solldauer (D_c),

wobei der Schritt des räumlichen Anordnens eine Methode zum Optimieren des räumlichen Auffüllens eines Blocks, der durch eine maximale Leistung (Pmax) und eine maximale Dauer (Dmax) definiert ist, mit elementaren Blöcken verwendet (40), **dadurch gekennzeichnet, dass** es, nach dem Verwenden der Methode zum Optimieren des räumlichen Auffüllens, einen Schritt des Neuanordnens und/oder des Neueinteilens (42) aufweist, um in Abhängigkeit von der gewählten Bedingung einen aggregierten Block zu erhalten, wobei die einzuhaltende Bedingung ferner das Einhalten eines Qualitätskriteriums vorgibt, das ein Leistungsdefizit auf einen prozentualen Anteil der elektrischen Leistung des aggregierten Blocks begrenzt.

2. Verfahren nach Anspruch 1, **dadurch gekennzeichnet, dass** die Methode zum Optimieren des räumlichen Auffüllens eine Methode zum Auffüllen mit Leistungsniveaus in absteigender Höhe ist, wobei die Höhe jedes Leistungsniveaus der Leistung eines elementaren Blocks entspricht, der dem Leistungsniveau zugehörig ist.

3. Verfahren nach Anspruch 2, **dadurch gekennzeichnet, dass** es, vor dem Verwenden der Methode zum Optimieren des räumlichen Auffüllens, einen Schritt des Einteilens (36) der elementaren Blöcke nach absteigender Leistung aufweist.

4. Verfahren nach einem der Ansprüche 1 bis 3, **dadurch gekennzeichnet, dass** die Methode zum Optimieren des räumlichen Auffüllens modifiziert wird, um ein Überschreiten in mindestens einer der Dimensionen der maximalen Dauer (Dmax) oder der maximalen Leistung (Pmax) des aufzufüllenden Blocks zu gestatten.

5. Verfahren nach Anspruch 4, **dadurch gekennzeichnet, dass** es ferner einen Schritt des Anpassens des aggregierten Blocks durch Zurückweisen eines elementaren Blocks, der die Dauer (D) des aggregierten Blocks überschreitet, umfasst, wobei das Überschreiten der Dauer des elementaren Blocks größer oder gleich einem vorbestimmten prozentualen Anteil der Dauer des elementaren Blocks ist.

6. Verfahren nach einem der Ansprüche 1 bis 5, bei dem das räumliche Anordnen von elementaren Blöcken eine Mehrzahl von Leistungsniveaus verwendet, die in Abhängigkeit von ihrer Höhe angeordnet sind, **dadurch gekennzeichnet, dass** es einen Schritt (46) des Suchens eines Leistungsniveaus aufweist, dessen zugeordnete Leistung dem Leistungssollwert (P_c) am nächsten liegt.

7. Verfahren nach Anspruch 6, **dadurch gekennzeichnet, dass** es einen Schritt (48) des Minimierens des Leistungsdefizits des aggregierten Blocks aufweist, mit einem progressiven Verringern der Dauer (D) des aggregierten Blocks, bis die unaufgefüllte Fläche des aggregierten Blocks kleiner oder gleich einem vorbestimmten prozentualen Anteil der Gesamtoberfläche des aggregierten Blocks ist, was die Sicherstellung eines Leistungsdefizitanteils gewährleistet, der kleiner als ein vorbestimmter Wert ist.

8. Verfahren nach einem der Ansprüche 1 bis 5, bei dem das räumliche Anordnen von elementaren Blöcken eine Mehrzahl von Leistungsniveaus verwendet, die in Abhängigkeit von ihrer Höhe angeordnet sind, **dadurch gekennzeichnet, dass** es einen Schritt (54) des Berechnens eines Leistungsdefizitanteils pro Leistungsniveau, der gleich einem Anteil an unaufgefüllter Fläche des Leistungsniveaus ist, und ein Neuanordnen (56) der Leistungsniveaus in einer aufsteigenden Reihenfolge der Leistungsdefizitanteile pro Leistungsniveau aufweist.

9. Verfahren nach Anspruch 8, **dadurch gekennzeichnet, dass** es, nach dem Neuanordnen (56) der Leistungsniveaus, ein Bestimmen (58) des höchsten Leistungsniveaus, bei dem das Qualitätskriterium in Bezug auf das Gesamtleistungsdefizit eingehalten ist, umfasst.

10. Verfahren nach Anspruch 9, **dadurch gekennzeichnet, dass** es ferner einen Schritt des Bestimmens (70) mindestens eines Leistungsniveaus umfasst, das ein Näherungskriterium gegenüber der Sollleistung (P_c) einhält, und ein Auswählen (72) einer Leistung des aggregierten Blocks, die gleichzeitig das Näherungskriterium gegenüber der Sollleistung und das Qualitätskriterium in Bezug auf das Gesamtleistungsdefizit einhält, umfasst.

11. Verfahren nach einem der Ansprüche 1 bis 10, **dadurch gekennzeichnet, dass** es einen Schritt des Aktualisierens (80-88) des bestimmten aggregierten Blocks umfasst, das zu regelmäßigen Zeitpunkten wiederholt wird.

12. Vorrichtung zur Lieferung eines Angebots an elektrischer Energie, wobei jedes Angebot an elektrischer Energie durch eine Leistung und eine Dauer in einem vorbestimmten Zeitintervall ausgehend von einer Mehrzahl von Lasten und/oder von Quellen von Kundenstandorten (2, 4) eines Elektrizitätsnetzes definiert ist, wobei jeder Kundenstandort, für das vorbestimmte Zeitintervall, geeignet ist, mindestens ein elementares Angebot zur Reduzierung oder zur Bereitstellung von elektrischer Leistung mit einer zugeordneten Dauer vorzuschlagen, das einer Reduzierung des Verbrauchs elektrischer Leistung einer Last (20, 26) des Standorts oder einer Bereitstellung von elektrischer Energie durch eine Quelle (22) elektrischer Energie des Standorts entspricht, aufweisend Mittel, die eingerichtet sind zum:

- Empfangen von Informationen in Bezug auf eine Bereitstellung von elektrischer Leistung stammend von den Lasten und/oder den Quellen jedes Kundenstandorts und zum Bestimmen, für jeden Kundenstandort, mindestens eines elementaren Blocks elektrischer Leistung, wobei jeder elementare Leistungsblock (BEi) in zwei Dimensionen durch eine zugeordnete Dauer (DEi) und eine zugeordnete elektrische Leistung (PEi) definiert ist;
- Durchführen eines räumliches Anordnens von elementaren Leistungsblöcken, um einen aggregierten Block zu erhalten, der durch eine elektrische Leistung (P) und eine Dauer (D) definiert ist, wobei die elektrische Leistung (P) und/oder die Dauer (D) des aggregierten Blocks eine Bedingung einhält, die ausgewählt ist aus einer Sollleistung (P_c) oder einer Solldauer (D_c), wobei das räumliche Anordnen eine Methode zum Optimieren des räumlichen Auffüllens eines Blocks , der durch eine maximale Leistung (Pmax) und eine maximale Dauer (Dmax) definiert ist, mit elementaren Blöcken verwendet,

**dadurch gekennzeichnet, dass** die Mittel eingerichtet sind, um, nach dem Verwenden der Methode zum Optimieren des räumlichen Auffüllens, ein Neuanordnen und/oder ein Neueinteilen durchzuführen, um in Abhängigkeit von der gewählten Bedingung einen aggregierten Block zu erhalten, wobei die einzuhaltende Bedingung ferner das Einhalten eines Qualitätskriteriums vorgibt, das ein Leistungsdefizit auf einen prozentualen Anteil der elektrischen Leistung des aggregierten Blocks begrenzt.

**Claims**

1. Method for providing aggregate offers of electrical energy, each offer of electrical energy being defined by a power and a duration in a predetermined time interval on the basis of a plurality of loads and/or sources of customer sites (2, 4) of an electrical network, each customer site being capable of proposing, for the predetermined time interval, at least one elementary offer for reduction or provision of electrical power having an associated duration and corresponding to a reduction in electrical power consumption by a load (20, 26) of the site or to a provision of electrical energy by an electrical energy source (22) of the site, implemented by one or more processor(s), comprising the steps of:

    - receiving information relating to a provision of electrical power from the loads and/or the sources of each customer site, and determining (34) at least one elementary block of electrical power for each customer site, each elementary block (BE$_i$) of power being defined in two dimensions by an associated duration (DE$_i$) and an associated electrical power (PE$_i$);
    - spatial arrangement (36, 38) of the elementary blocks of power in order to obtain an aggregate block defined by an electrical power (P) and a duration (D), said electrical power and/or said duration of the aggregate block satisfying a constraint selected from among a set power value (P_c) or a set duration value (D_c),

    the step of spatial arrangement implementing (40) a method for optimising spatial filling of a block, defined by a maximum power (P$_{max}$) and a maximum duration (D$_{max}$), with elementary blocks, **characterised in that**

    it comprises a step of rearranging and/or re-slicing (42) after the method for optimising spatial filling has been implemented, in order to obtain an aggregate block according to the selected constraint, wherein the constraint to be satisfied also requires a quality criterion that limits a power deficit to a percentage of the electrical power of the aggregate block to be satisfied.

2. Method according to claim 1, **characterised in that** the method for optimising spatial filing is a method for filling in order of decreasing power level, each power level corresponding to the power of an elementary block belonging to said power level.

3. Method according to claim 2, **characterised in that** it comprises, prior to the implementation of the method for optimising spatial filling, a step of sorting (36) said elementary blocks in order of decreasing power.

4. Method according to any of claims 1 to 3, **characterised in that** the method for optimising spatial filling is modified in order to allow an overshoot according to at least one of the dimensions of maximum duration (D$_{max}$) or maximum power (P$_{max}$) of the block to be filled.

5. Method according to claim 4, **characterised in that** it further comprises a step of adjusting the aggregate block by rejecting an elementary block that overshoots the duration (D) of the aggregate block, the overshoot of the duration of said elementary block being greater than or equal to a predetermined percentage of the duration of said elementary block.

6. Method according to any of claims 1 to 5, in which the spatial arrangement of the elementary blocks implements a plurality of power levels arranged according to the value thereof, **characterised in that** it comprises a step (46) of searching for a power level of which the associated power is the closest to the set power value (P_c).

7. Method according to claim 6, **characterised in that** it comprises a step (48) of minimising the power deficit of the aggregate block comprising a progressive decrease in the duration (D) of the aggregate block until the unfilled area of said aggregate block is less than or equal to a predetermined percentage of the total area of the aggregate block, making it possible to ensure a degree of power deficit of less than a predetermined value.

8. Method according to any of claims 1 to 5, in which the spatial arrangement of elementary blocks implements a plurality of power levels arranged according to the value thereof, **characterised in that** it comprises a step (54) of calculating a degree of power deficit per power level equal to a degree of unfilled area of said power level, and rearranging (56) the power levels in order of increasing degree of power deficit per power level.

9. Method according to claim 8, **characterised in that** it comprises determining (58), after said rearrangement (56) of the power levels, the highest power level for which the quality criterion relating to the total power deficit is satisfied.

10. Method according to claim 9, **characterised in that** it further comprises a step of determining (70) at least one power level that satisfies a criterion of proximity with respect to the set power value (P_c), and selecting (72) a power of said aggregate block that satisfies both the criterion of proximity with respect to the set power value and said quality criterion relating to the total power deficit.

11. Method according to any of claims 1 to 10, **characterised in that** it comprises a step of updating (80-88) the determined aggregate block, repeated at regular time intervals.

12. Device for providing aggregate offers of electrical energy, each offer of electrical energy being defined by a power and a duration in a predetermined time interval on the basis of a plurality of loads and/or sources of customer sites (2, 4) of an electrical network, each customer site being capable of proposing, for the predetermined time interval, at least one elementary offer of reduction or provision of electrical power having an associated duration and corresponding to a reduction in electrical power consumption by a load (20, 26) of the site or to a provision of electrical energy by an electrical energy source (22) of the site,

comprising means suitable for:

- receiving information relating to a provision of electrical power from the loads and/or sources of each customer site, and determining at least one elementary block of electrical power for each customer site, each elementary block ($BE_i$) of power being defined in two dimensions by an associated duration ($DE_i$) and an associated electrical power ($PE_i$);
- carrying out a spatial arrangement of elementary power blocks in order to obtain an aggregate block defined by an electrical power (P) and a duration (D), said electrical power and/or said duration of the aggregate block satisfying a constraint selected from among a set power value (P_c) or a set duration value (D_c), the spatial arrangement implementing a method for optimising spatial filling of a block, defined by a maximum power ($P_{max}$) and a maximum duration ($D_{max}$), with elementary blocks,

**characterised in that** the means are suitable for rearranging and/or re-slicing after the method for optimising spatial filling has been implemented, in order to obtain an aggregate bloc according to the selected constraint, wherein the constraint to be satisfied also requires a quality criterion that limits a power deficit to a percentage of the electrical power of the aggregate block to be satisfied.

Fig.1

Sélection contrainte — *30*

Elaboration offres élémentaires — *32*

Elaboration blocs élémentaires — *34*

Classement puissance décroissante — *36*

Application FFDH modifié — *40*

*38*

Ré-arrangement / contraintes — *42*

Bloc agrégé PxD

*Fig.2*

Fig.3

Fig.4

Fig.5

```
┌─────────────────────────┐
│ Découpage temporel à D_c │         62
└─────────────────────────┘
             │
             ▼
┌─────────────────────────┐
│   Calcul taux de déficit de │     64
│    puissance par niveau  │
└─────────────────────────┘
             │
             ▼
┌─────────────────────────┐
│   Réarrangement niveaux  │        66
│      de puissance        │
└─────────────────────────┘
             │
             ▼
┌─────────────────────────┐
│    Déterminer niveau de  │        68
│ puissance respectant critère │
│       de qualité         │
└─────────────────────────┘
             │
             ▼
┌────────┐     ┌─────────────────────────┐
│  STOP  │◄────│    Déterminer niveau de  │    70
└────────┘     │ puissance respectant critère │
               │   de proximité de P_c    │
               └─────────────────────────┘
                          │
                          ▼
               ┌─────────────────────────┐
               │    Sélection puissance   │        72
               │        optimale          │
               └─────────────────────────┘
                          │
                          ▼
               ┌─────────────────────────┐
               │   Offre bloc agrégé PxD  │        74
               └─────────────────────────┘
```

Fig.6

*80*

P(E(t+1) > P(E(t)) ?

non        oui

*84*

P(E(t+1) < P(E(t)) ?

*82*

Appliquer
rangement / contrainte

oui

*86*

Ajout blocs élémentaires

*88*

Appliquer
rangement / contrainte

*Fig.7*

**EP 3 091 629 B1**

## RÉFÉRENCES CITÉES DANS LA DESCRIPTION

**Documents brevets cités dans la description**

- US 20080281663 A